(19) Europäisches Patentamt / European Patent Office / Office européen des brevets

(11) **EP 3 217 808 B1**

(12) **FASCICULE DE BREVET EUROPEEN**

(45) Date de publication et mention
de la délivrance du brevet:
**18.12.2019 Bulletin 2019/51**

(21) Numéro de dépôt: **15817939.0**

(22) Date de dépôt: **16.11.2015**

(51) Int Cl.:
*A23K 10/38* (2016.01)     *A23K 50/20* (2016.01)

(86) Numéro de dépôt international:
**PCT/FR2015/053088**

(87) Numéro de publication internationale:
**WO 2016/075422 (19.05.2016 Gazette 2016/20)**

(54) **PROCEDE DE VALORISATION DE BIOMASSE DE LEVURE ISSUES DE LA PRODUCTION D'ETHANOL**

VERFAHREN ZUR VERWERTUNG VON HEFE-BIOMASSE AUS DER HERSTELLUNG VON ETHANOL

METHOD FOR THE VALORISATION OF YEAST BIOMASS RESULTING FROM THE PRODUCTION OF ETHANOL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2014 FR 1461022**

(43) Date de publication de la demande:
**20.09.2017 Bulletin 2017/38**

(73) Titulaire: **Roquette Frères**
**62136 Lestrem (FR)**

(72) Inventeurs:
• **LECOCQ, Aline**
**59420 MOUVAUX (FR)**
• **DELPORTE, Christian**
**59194 Anhiers (FR)**

(74) Mandataire: **Plasseraud IP**
**66, rue de la Chaussée d'Antin**
**75440 Paris Cedex 09 (FR)**

(56) Documents cités:
EP-A1- 0 213 023     WO-A1-03/063609
WO-A2-2008/009733    DE-A1-102007 040 068
US-A- 2 698 826      US-A- 3 236 740
US-A- 4 361 651

# EP 3 217 808 B1

**Description**

## Domaine de l'invention

La présente invention concerne la production d'une biomasse de levure séchée, issue d'un procédé de fermentation éthanolique. Plus particulièrement la présente invention concerne un procédé permettant une meilleure valorisation des co-produits de la production d'éthanol.

## Etat de la technique

La production d'éthanol à base de céréales a connu un fort développement dans le Monde, pour répondre à la volonté de substituer des carburants d'origine fossile, par une origine renouvelable produite par l'agriculture.

Le procédé habituel à partir de céréales consiste en une mise en milieu aqueux, hydrolyse enzymatique, fermentation par Saccharomyces Cerevisiae et distillation. Il génère de l'éthanol, pour environ un tiers de la matière sèche, du gaz carbonique pour un autre tiers de la matière sèche, et le reste est un co-produit qui sera généralement séché, pour devenir une drêche de distillation de céréales destinée à l'alimentation des animaux.

Aux Etats-Unis d'Amérique, la production d'éthanol carburant est majoritairement à base de maïs et génère une drêche de maïs, appelée « Corn DDGS » (Dried Distillers'Grains with Solubles).

En Europe, la production à partir de céréales est majoritairement à base de blé, et génère une drêche de blé. Il existe également une production de drêche de maïs, ou drêche de céréales, lorsque la production d'éthanol est réalisée à partir d'un mélange de différentes céréales (Orge, Seigle, Triticale, Sorgho, Avoine, Riz). Il est possible d'ajouter un complément sous forme d'amidon d'autres origines (pomme de terre, manioc, patate douce, pois), de sucres issus de plantes sucrières (Betterave, Canne à sucre, Chicorée), ou tout autre substrat fermentescible par les levures, soit directement, soit après hydrolyse.

Les « Corn DDGS » et « Wheat DDGS » connus de l'art antérieur sont toutefois tous très riches en fibres, riches en protéines végétales (notamment en gluten) et donc pauvres en acides aminés essentiels, particulièrement en lysine. En alimentation animale, on entend par acides aminés essentiels, ceux qui sont particulièrement nécessaires à la performance des animaux d'élevage et souvent déficitaires dans les rations animales : lysine, méthionine, cystine, thréonine, tryptophane, valine, arginine. D'autres acides aminés peuvent être utiles pour l'animal, mais considérés comme non essentiels car rarement déficitaires, comme l'acide glutamique.

La conséquence est une faible valorisation économique des drêches de céréales, qui sont principalement utilisées pour nourrir les ruminants (bovins laitiers, bovins à viande, moutons, chèvres), des monogastriques adultes ayant de faibles besoins protéiques, ou des poissons et crustacés de type herbivore (carpe, tilapia, crevettes). Les drêches de céréales sont peu utilisées pour nourrir les animaux ayant des besoins protéiques élevés : jeunes animaux d'élevage (porcelets, veaux, jeunes volailles, jeunes crevettes), chiens, chats, poissons de type carnivore (saumon, truite, bar, dorade). Ces animaux ont besoin d'une alimentation bien équilibrée en acides aminés essentiels (lysine, méthionine, thréonine, tryptophane) pour couvrir leur besoin, éviter les pertes intestinales d'azote sources de pollution, de diarrhée, de mauvaises odeurs et perturbation de la flore microbienne du colon.

Il existe cependant une fraction très intéressante dans la part non volatile du moût de fermentation : la biomasse de levure (notamment Saccharomyces Cerevisiae).

La biomasse de levure est bien connue de l'art antérieur en nutrition humaine et animale. C'est une source protéique de haute qualité, bien équilibrée en acides aminés essentiels (par exemple la levure de bière présente une teneur en lysine environ deux fois plus élevée en comparaison aux protéines de céréales). La biomasse de levure, de type Saccharomyces Cerevisiae, est reconnue pour son apport naturel de vitamines du groupe B, pour son effet favorable sur la digestion des fibres chez les herbivores (ruminants, chevaux, lapins), pour son effet bénéfique sur l'immunité, la réduction des effets néfastes des mycotoxines, en tant que source naturelle de nucléotides ou facteur d'appétence pour les animaux de compagnie.

La biomasse de levure est traditionnellement obtenue lors de la production de la bière, par filtration puis séchage sur tambour ou par atomisation. Il s'agit donc d'un co-produit, dont la disponibilité n'est pas régulière, dépendante de la production de la bière. De nombreuses brasseries ne sont pas équipées pour sécher la levure liquide, qui devra être transportée sur de grandes distances pour être séchée.

Une autre façon de produire de la biomasse de levure est une production volontaire par fermentation sur un substrat de carbohydrates (saccharose, hydrolysat d'amidon).

Il s'agit alors d'un produit principal, et non d'un co-produit, dont le coût de production est élevé, peu accessible pour l'industrie de la nutrition des animaux d'élevage et animaux de compagnie.

Les auteurs du document FR 2949645 ainsi que ceux des documents WO 2010/109203 et Use of cereal crops for food and fuel - Characterization of a novel bioethanol coproduct for use in meat poultry diets (Food and Energy Security, 2013, 2 (3), pp. 197-206) ont proposé d'améliorer la qualité nutritionnelle des DDGS issus de la production de bioéthanol en tentant d'isoler plus particulièrement la biomasse de levure. Les deux procédés mis au point utilisent comme matière première végétale des céréales entières. En d'autres termes, les procédés comprennent la transformation d'une matière végétale riche en fibres et gluten. En conséquence, le co-produit obtenu selon ces deux procédés contient toujours une forte proportion de protéines de céréales, avec pour conséquence, une faible teneur en lysine relativement à la protéine totale (moins de 3 g de lysine pour 100 g de protéine).

Les documents US 2698826, US 4361651, WO 03/063609 et DE 102007040068 décrivent des procédés de fabrication d'éthanol dans lesquels les moûts fermentescibles sont quasiment exempts de fibres résiduelles et de gluten.

Le document EP 213023 décrit un procédé de fabrication d'éthanol dans lequel le moût fermentescible comprend encore de grandes quantités de fibres et de gluten. Du fait de la présence de grandes quantités de fibres dans le moût fermentescible, l'aliment protéiné comprend une teneur en protéine inférieure à 25%. De plus, l'ensemble de la masse sèche étant récupérée pour la fabrication de cet aliment protéiné et aucune étape de séparation n'étant réalisée avant concentration puis séchage de cet aliment, il comprend de grandes quantités de cendres. Cet aliment protéiné se rapproche des DDGS évoqués ci-dessus.

Le document WO 2008/0099733 décrit quant à lui un procédé de fabrication d'éthanol dans lequel on récupère à l'issue de la fermentation et avant distillation un lait de levures présentant une masse sèche d'environ 20%. Ce lait est évaporé sous vide afin de récupérer l'éthanol présent. Une partie de cette phase épaisse est encore concentrée, récupérée puis séchée en tant que levure sèche. Aucune étape de séparation n'est réalisée avant concentration puis séchage de ce lait de levures. L'ensemble de la masse sèche est donc récupérée lors de la fabrication de cette levure sèche et elle comprend, notamment, de grandes quantités de cendres.

La présente invention concerne un procédé de production d'éthanol, majoritairement à base de céréales et plus particulièrement de blé, permettant une récupération optimale de la biomasse de levure, cette biomasse de levure présentant une faible quantité de cendres et de protéines végétales.

## Résumé de l'invention

Ainsi un premier objet de la présente invention vise un procédé de récupération d'une composition riche en protéines de levure d'un résidu de distillation issu de la production d'éthanol comprenant :

a) la préparation d'un moût fermentescible comprenant au moins 40% en poids sec de matière sèche d'amidon de blé ;

b) l'hydrolyse enzymatique du moût fermentescible;

c) la fermentation de l'hydrolysat ainsi obtenu ;

d) la distillation du produit fermenté;

e) la séparation du résidu de distillation pour obtenir

• une première fraction (A) riche en protéines de levures et contenant des fibres résiduelles et
• une deuxième fraction (B) comprenant des produits solubles du résidu de distillation ;

f) le séchage de la fraction (A) pour obtenir une composition riche en protéines de levure ; caractérisé en ce que le moût fermentescible comprend moins de 10% de protéines végétales et une teneur en fibres résiduelles comprise entre 3 % minimum et 6 % maximum.

Un deuxième objet de la présente invention concerne une composition riche en protéines de levure susceptible d'être obtenue selon le procédé objet de la présente invention.

Un troisième objet de la présente invention vise un aliment pour animaux comprenant la dite composition riche en protéines de levure.

## Description détaillée de l'invention

Dans la présente invention, le terme « fibres » correspond aux parois végétales des céréales, notamment de blé. Elles comprennent notamment les sons.

Le terme « fibres résiduelles » désigne les fibres n'étant pas éliminées lors de la préparation du lait d'amidon. Les fibres résiduelles comprennent principalement les fibres internes des céréales, notamment du blé, telles que les pentosanes (principalement des arabinoxylanes) mais peuvent également comprendre des sons résiduels.

La teneur en fibres résiduelles est déterminée selon la méthode AFNOR NF V18-122 : 1997 qui consiste en un traitement par action de dodécylsulfate en milieu neutre avec l'utilisation d'enzymes : une alpha amylase (la termamyl 120L) et une protéase (la pronase). Cette teneur s'exprime en pourcentage de Neutral Detergent Fibre sur la matière sèche.

Dans la présente invention le terme « protéines de levure » signifie les protéines issues des levures, aussi bien celles provenant des levures introduites à l'étape de fermentation du l'hydrolysat d'amidon que celles générées lors de la croissance et la multiplication des levures (*saccharomyces cerevisiae*). La teneur en protéine de levure dans un échantillon ne pouvant être mesurée directement, elle est déterminée, dans la présente invention, à partir de la teneur en lysine. En effet, le procédé selon l'invention ne fait intervenir que des protéines végétales, notamment issues du blé, et des protéines de levures, notamment issues de *saccharomyces cerevisiae.* Par ailleurs, les protéines de *saccharomyces cerevisiae* contiennent généralement 6,1% de lysine et les protéines de blé contiennent généralement 2,9% de lysine. Ainsi, au sens de la présente invention, la teneur en protéines de levure peut être déterminée à partir de la teneur en lysine par la formule (1) suivante :

$$\%\text{levure} = (\%\text{lysine - 2,9}) / (6.1\text{-}2.9)\,(1)$$

Dans laquelle %levure représente le pourcentage en protéine de levure par rapport au total des protéines dans l'échantillon ; et %lysine représente le pourcentage en lysine par rapport au total des protéines dans l'échantillon.

Dans la présente invention le terme « protéines végétales » désigne les protéines issues de sources végétales, notamment du blé, tel que le gluten. Dans le cas du moût fermentescible, la teneur en protéines végétales correspond à la teneur en protéines totales.

Dans la présente invention, la teneur en protéines totales est obtenue en multipliant la teneur en azote total par le coefficient 6,25. La teneur en azote total est déterminée par la méthode Dumas selon la norme AFNOR NF V18-120: 1997. Cette teneur est exprimée en pourcentage en poids par rapport au total de matière sèche.

Dans la présente invention, la teneur en lysine est déterminée selon une méthode consistant en une hydrolyse acide (HCl 6N) (24h à 115°C) suivie d'une analyse par chromatographie.

Sauf indication contraire, dans la présente invention, les pourcentages indiqués sont exprimés en poids sec par rapport au total de matière sèche.

L'étape a) du procédé suivant l'invention consiste à préparer un moût fermentescible.

Le moût fermentescible comprend au moins 40% en poids, de préférence au moins 50% en poids, plus préférentiellement au moins 70% en poids, encore plus préférentiellement 90% en poids d'amidon de blé. Dans un mode de réalisation particulier, le moût fermentescible comprend exclusivement de l'amidon issu de blé.

L'amidon de blé est typiquement apporté au moût fermentescible sous la forme d'un lait d'amidon de blé. Par « lait d'amidon de blé » au sens de la présente invention, on entend un lait d'amidon de blé non purifié, c'est-à-dire comprenant notamment une certaine quantité de fibres résiduelles et de protéines de blé. A titre d'exemple, un lait d'amidon selon l'invention comprend généralement au moins 75% d'amidon, 2 à 8% de fibres résiduelles et 3 à 6% de protéines végétales. Le lait d'amidon comprend généralement en outre des cendres, des sucres et des lipides.

Ainsi l'étape a) comprend avantageusement une étape de préparation d'un lait d'amidon de blé. Les méthodes de préparation de lait d'amidon sont bien connues de l'homme du métier. Celles-ci peuvent comprendre notamment des étapes d'élimination de fibres et d'élimination de gluten.

Typiquement, la préparation du lait d'amidon de blé selon l'invention comprend la séparation des fibres par broyage et tamisage des grains de blé et la séparation du gluten par lixiviation. Plus particulièrement, le lait d'amidon de blé est obtenu à partir des grains de blé par :

- préparation d'une mouture de farine de blé par broyage des grains de blé ;
- séparation des fibres (notamment les sons), et éventuellement des germes, par voie sèche, notamment par tamisage ;
- hydratation de la mouture de farine de manière à obtenir une pâte ;
- séparation du gluten par lixiviation.

Il est essentiel que le moût fermentiscible comprenne de l'amidon de blé. En effet, cet amidon comprend des fibres résiduelles permettant d'obtenir la composition de l'invention. Toutefois, le moût fermentescible peut comprendre des amidons provenant d'autres sources que le blé, tels que l'amidon de maïs, de seigle, d'orge, d'avoine, de triticale, d'épeautre, de millet, de sorgho, de féverole, de pomme de terre, de patate douce, de riz, de quinoa, de châtaigne, de lentille, de pois chiche, d'haricot, de fève, de manioc ou de sarrasin ou leurs mélanges.

Le moût fermentescible peut également comprendre un complément de matières fermentescibles. Les sources complémentaires de matières fermentescibles sont de préférence des sucres ou des sirops de glucose issus de l'hydrolyse de l'amidon ou du saccharose. L'Homme du métier pourra utiliser ces éventuels constituants complémentaires dans des quantités permettant d'obtenir le moût fermentescible utile à l'invention, notamment en ce qui concerne les quantités d'amidon, de protéines végétales et de fibres résiduelles.

Le moût fermentescible est appauvri en protéines végétales (notamment en gluten) et en fibres. Le moût fermentescible comprend moins de 10% de protéines végétales et de 3 à 6% de fibres. De préférence, le moût fermentescible comprend moins de 5% de protéines végétales.

Il contient en outre encore des protéines solubles (non gluten) ainsi que des carbohydrates non amylacés tels que les gommes (notamment des pentosanes).

L'étape b) du procédé selon la présente invention consiste à hydrolyser le moût fermentescible.

Cette étape est bien connue de l'homme du métier. L'hydrolyse est réalisée par voie enzymatique. Les enzymes mises en œuvre rompent les liaisons glucidiques de la macromolécule d'amidon afin d'obtenir des sucres assimilables par la levure.

Plus précisément, la libération du glucose par hydrolyse enzymatique se fait en deux étapes : la liquéfaction et la saccharification.

Il s'agit dans un premier temps de mettre en contact le moût fermentescible avec une enzyme de liquéfaction, en particulier une alpha-amylase, dans des proportions et des conditions (pH, température) que l'homme du métier saura ajuster.

Afin d'assurer un fonctionnement optimal de l'enzyme de liquéfaction, le pH du moût fermentescible est de préférence fixé entre 5 et 6 (ajustement à la soude et/ ou ammoniaque si besoin) et la température, maintenue entre 80°C et 95°C pendant le temps de contact, de préférence de deux heures.

Le moût liquéfié ainsi obtenu est ensuite refroidi et son pH ajusté afin d'être soumis au traitement enzymatique de saccharification.

Afin d'assurer un fonctionnement optimal de l'enzyme de saccharification, la température du moût liquéfié est comprise entre 55°C et 65°C et le pH amené entre 4 et 5 (par ajout par exemple d'acide sulfurique et phosphorique).

L'étape de saccharification consiste en la mise en contact du moût liquéfié avec une ou plusieurs enzymes en combinaison. Parmi les enzymes pouvant être utilisées lors de cette étape, nous pouvons citer les enzymes saccharifiantes : amylases (alpha et beta-amylases), glucoamylases, pullulanases, maltases ainsi que protéases, hémicellulases, cellulases, xylanases, beta-glucanases, lipases, lysophospholipase. Ces dernières ne sont pas dites saccharifiantes mais permettent de faciliter l'action des enzymes saccharifiantes par action sur les protéines, les lipides, les sucres complexes et les fibres, avec un effet notoire sur la viscosité du milieu. Même si la transformation des fibres en sucres reste limitée à ce stade, cette action enzymatique donnera des fibres plus facilement fermentescibles lorsqu'elles seront utilisées comme aliment pour animaux.

L'homme du métier saura adapter le dosage des enzymes, les conditions de pH et température ainsi que le temps de contact.

L'hydrolysat d'amidon ainsi obtenu est ensuite refroidi avant de subir une étape de fermentation. Le refroidissement pourra être effectué par exemple à l'aide d'échangeurs platulaires (eau de surface) à une température comprise entre 30°C et 40°C.

L'étape c) du procédé consiste à réaliser la fermentation de hydrolysat d'amidon.

Au cours de cette étape, les carbohydrates, principalement le glucose, sont transformés, en milieu anoxique, en éthanol et en dioxyde de carbone.

La fermentation, étape bien connue de l'homme du métier, peut être réalisée en discontinu (ou batch) ou de manière continue.

La levure utilisée pour la fermentation peut être choisie parmi les *Saccharomyces, Schizosaccharomyces, Brettanomyces, Schwanniomyces, Candida, Pichia,* et est de préférence la *Saccharomyces cerevisiae.*

Un ajout d'air et d'azote est effectué en début de fermentation. De tels apports permettent d'assurer la multiplication des levures et par conséquence la production de protéines.

L'azote est particulièrement nécessaire du fait de la séparation du gluten et autres protéines végétales au début du procédé. Il est ajouté au milieu de fermentation de préférence sous forme d'urée en solution.

D'autres sources d'azote peuvent être envisagées. On peut citer, à titre d'exemple, l'ammoniac, les sels d'ammonium, les nitrates, les eaux de trempe (concentrées), les extraits de levures.

La quantité introduite d'azote est de préférence telle qu'elle est totalement transformée en biomasse de levure, et donc que la quantité d'azote minéral en sortie de fermentation est quasi nulle.

Des sources de phosphore et de soufre, apportées par exemple sous forme acide, peuvent également être ajoutées au début et/ou au milieu de la fermentation afin de réguler le pH.

L'homme du métier saura adapter le dosage des enzymes, les conditions de pH et température ainsi que le temps de contact. Ceci dit, la température des fermenteurs est de préférence maintenue à une valeur comprise entre 25 et 35 °C et le pH est maintenu à une valeur comprise entre 3,4 et 4,4.

En fin de fermentation, l'anaérobie doit être respectée pour privilégier la transformation du glucose en éthanol.

Il se produit alors une augmentation de la teneur en alcool et inversement, une chute de celle en glucose. La fermentation est ainsi pilotée selon les teneurs en alcool, sucres et amidon résiduels. D'autres métabolites issus de la fermentation sont aussi formés, comme le glycérol ou les acides organiques. Il est souhaitable de maintenir la quantité de ces métabolites au niveau le plus faible possible pour obtenir un meilleur rendement en alcool. Le temps de fermentation peut être ajusté avec le débit de sortie du dernier fermenteur vers les colonnes de distillation. La teneur en éthanol en fin de fermentation atteint généralement 80 à 110 g/L. Les gaz de fermentation issus des fermenteurs non aérés sont récupérés. Ainsi le dioxyde de carbone pourra être valorisé. Après purification et liquéfaction, le dioxyde de carbone pourra par exemple être utilisé dans des applications alimentaires (boissons gazeuses) ou industrielles.

L'étape d) du procédé selon l'invention consiste à procéder à la distillation du produit fermenté.

La distillation permet de séparer l'éthanol produit au cours de la fermentation sous forme d'un mélange azéotropique avec l'eau contenant jusqu'à 95/96% vol d'éthanol.

L'éthanol brut récupéré après condensation des vapeurs issues des colonnes pourra être avantageusement déshydraté sur tamis moléculaire (par exemple zéolithe) et concentré jusqu'à 99,9% vol.

On obtient à l'issue de cette distillation d'une part une fraction contenant l'éthanol et d'autre part un résidu de distillation ou vinasses.

Le résidu de distillation selon la présente invention renferme :

- des composés insolubles : fibres résiduelles de céréales et cellules de levures notamment (facilement observables au microscope), et
- des matières solubles : protéines (albumines, globulines provenant essentiellement du blé), glycérol, sucres partiellement ou non hydrolysés, éléments minéraux provenant des matières premières ou ajoutés lors de la phase fermentaire.

La teneur en matière sèche du résidu de distillation est généralement comprise entre 3 et 6 %.

Le résidu de distillation comprend généralement, par rapport à la quantité totale du résidu, une quantité d'éthanol inférieure à 0,5%.

Dans le procédé objet de la présente invention, et contrairement à la majorité des procédés de production d'éthanol à partir de céréales décrits dans la littérature, la plus faible quantité de matière sèche du résidu de distillation s'explique par le fait que le moût fermentescible est dépourvu de gluten ainsi que de la majorité des fibres (notamment des sons de blé).

Le résidu de distillation présente entre 18 et 22% de protéines totales sur matière sèche.

Cette fraction contient peu de protéines végétales et donc majoritairement des protéines de levures. Ceci est corroboré par la haute teneur en lysine (supérieure à 5% sur sec relativement à la protéine totale).

Ceci est totalement différent des procédés habituels à base de céréales, qui conduisent à un résidu de distillation contenant peu de levure et majoritairement des protéines de céréales, du gluten notamment.

L'étape e) du procédé consiste à séparer le résidu de distillation pour obtenir :

- Une première fraction (A) riche en fibres et protéines de levures,
- Et une deuxième fraction (B) comprenant des produits solubles du résidu de distillation.

Cette étape de séparation est effectuée de préférence par séparation mécanique, en particulier par décantation, centrifugation ou filtration. A titre d'exemple d'appareillages de séparation mécanique par centrifugation, on peut citer les centrifugeuses à buses et centrifugeuses à assiettes et bol. A titre d'exemple d'appareillages de séparation par filtration, on peut citer les filtres à bandes, filtres à plateaux, tamis, et membranes filtrantes. De préférence, la séparation est réalisée par décantation, et plus particulièrement à l'aide d'un décanteur horizontal.

La fraction (A) comprend typiquement au moins 50%, de préférence entre 70 et 99%, de protéines de levures par rapport au total de protéines dans la fraction (A).

La fraction (A) comprend typiquement de 40% à 60%, de préférence de 45% à 55% de fibres résiduelles.

Plus précisément, la fraction (A) est composée de 25 à 35 % de matière sèche, et comprend entre 40 et 50%, plus préférentiellement 45% de fibres résiduelles, entre 25 et 35 %, plus préférentiellement 30% de protéines (comprenant au moins 50%, de préférence entre 70 et 99%, de protéines de levures par rapport au total de protéines), entre 5 et 15%, de préférence 10% de lipides et entre 1 et 5%, de préférence 2% de cendres. Du fait de la présence des fibres résiduelles, cette fraction se présente une structure solide, et plus particulièrement est sous forme d'une pâte. La fraction (A) comprend généralement, par rapport à la quantité totale de cette fraction, une quantité d'éthanol inférieure à 0,1%.

Sans vouloir être liée par une quelconque théorie, la Demanderesse pense que les fibres résiduelles présentes dans le résidu de distillation piègent les levures en suspension. Ainsi, contrairement aux procédés classiques, les levures se retrouvent principalement dans la fraction insoluble. Il est donc possible de séparer plus facilement les levures des produits solubles.

La fraction (B) qui renferme la majorité des produits solubles du résidu de distillation présente de 3 à 5 % de matière sèche et comprend notamment du glycérol, des sucres partiellement ou non hydrolysés, 15 à 25 %, de préférence 20%, de peptides et protéines solubles telle que l'albumine et la globuline, ainsi que des minéraux (entre 3 et 8 %, de préférence 5%). Cette fraction pourra être évaporée pour obtenir un liquide nutritif pour animaux d'élevage (principalement porcs à l'engrais, bovins laitiers et bovins à viande), ou co-séché sur support son de blé.

Le moût fermentescible utilisé dans le procédé selon l'invention étant quasi dépourvu de gluten ainsi que de la majorité des fibres de céréales, contrairement à la plupart des procédés décrits dans l'art antérieur, une seule étape de séparation suffit à obtenir une fraction (A) riche en protéines de levures, et pauvres en sucres réducteurs (glucose et fructose libres inférieur à 2 % sur matière sèche) et éléments minéraux ou sels solubles.

A l'issue de l'étape e), la fraction (A) représente environ 1/3 en poids sur matière sèche de la quantité de matière sèche totale du résidu de distillation et la fraction (B), les 2/3 restants.

L'étape f) du procédé consiste à sécher la fraction (A) de manière à obtenir comme co-produit final une composition riche en protéines de levures.

L'étape de séchage peut être réalisée à l'aide de sécheurs rotatifs à tambours, de sécheurs à lit fluidisé, de sécheurs à disques ou plateaux, de sécheurs à vis, de sécheurs à palettes, de convoyeurs à bande, de sécheurs pneumatiques, de séchoirs flash ou de sécheurs tourbillonnaires. De préférence, le sécheur utilisé est un sécheur tourbillonnaire.

Un sécheur tourbillonnaire (ou « dispersion dryer ») est un sécheur à transport pneumatique avec système de dispersion, plus particulièrement d'un sécheur à circulation d'air chaud. La fraction (A), se présentant typiquement sous la forme d'une pâte ; le système de dispersion assure la fragmentation du produit pâteux permettant une augmentation de la surface d'échange et donc une augmentation de la capacité évaporatoire. De plus, le produit n'est en contact qu'avec des courants d'air chaud de faible température (la température de l'air à l'intérieur de la chambre de séchage n'excède pas 100°C. De préférence, le produit est séché dans la chambre de séchage pendant un temps de contact inférieur à 30 secondes. Ainsi le produit n'est exposé qu'à de très faibles sollicitations thermiques ce qui permet de réduire considérablement la dégradation des protéines notamment par réaction de Maillard. On peut notamment utiliser un séchoir tourbillonnaire choisi parmi ceux de marque HOSOKAWA MICRON CORPORATION de type Drymeister DMR-H, de marque ALLGAIER® de type FL-T et de marque BEPEX de type PCX.

La composition obtenue à l'issue de cette étape de séchage se présente sous la forme d'une composition pulvérulente, fluide, non poussiéreuse et facile d'emploi en usine.

La composition présente de préférence une granulométrie comprise entre 100 et 1000 microns et un taux d'humidité résiduel inférieur à 10%, de préférence comprise entre 5 et 7 %. A ce taux d'humidité, la composition présente une Aw (activité de l'eau) inférieure à 0,7, de préférence inférieure à 0,5 permettant de limiter la prolifération de micro-organismes (croissance des moisissures, levures et bactéries) ainsi que de limiter les détériorations physico-chimiques et les activités enzymatiques.

Un objet de la présente invention concerne une composition riche en protéines de levure susceptible d'être obtenue selon le procédé défini précédemment.

La composition obtenue à l'issue du procédé objet de la présente invention présente :

- Une teneur en protéines totales de 25 à 35 % ;
- Une forte teneur en acides aminés essentiels et notamment une teneur en lysine supérieure à 4 g/100 g de protéines, de préférence entre 4 et 8g/100g de protéines et plus préférentiellement de 6g/ 100g de protéines ;
- Une teneur en cendres inférieure à 3 %, en moyenne 2 %, rendant possible l'utilisation à haute teneur dans les aliments pour espèces sensibles à l'excès de minéraux (jeunes animaux, carnivores domestiques, alevins);
- Une teneur en fibres résiduelles, comprise entre 40 et 50%, qui constituent un bon support pour les fermentations intestinales ;
- Une teneur en lipides comprise entre 8 et 12%, de préférence de 10 %, conférant une bonne valeur énergétique au produit ;
- Une faible teneur en sucres réducteurs, inférieure à 2 %.

Le profil en acide aminés typique de la composition obtenue à l'issue du procédé objet de la présente invention est le suivant :

|  | g/100g de protéines | g/100g de produit brut |
|---|---|---|
| Total protéines N6.25 |  | 26,6 |
| Acide aspartique | 7,5 | 2,0 |
| Thréonine | 4,2 | 1,12 |

(suite)

|  | g/100g de protéines | g/100g de produit brut |
| --- | --- | --- |
| Sérine | 4,9 | 1,3 |
| Acide glutamique | 16,5 | 4,38 |
| Glycine | 4,8 | 1,28 |
| Alanine | 5,2 | 1,38 |
| Valine | 5,6 | 1,48 |
| Isoleucine | 4,1 | 1,09 |
| Leucine | 7,7 | 2,0 |
| Tyrosine | 3,5 | 0,9 |
| Phénylalanine | 4,4 | 1,16 |
| Lysine | 5,6 | 1,5 |
| Histidine | 2,5 | 0,67 |
| Arginine | 6,3 | 1,67 |
| Proline | 6,1 | 1,61 |
| Cystine | 1,9 | 0,51 |
| Méthionine | 1,8 | 0,49 |
| Tryptophane | 1,4 | 0,37 |

Ainsi la composition obtenue à l'issue du procédé objet de la présente invention présente des propriétés nutritionnelles très différentes de tous les produits déjà décrits dans la littérature, issus de fermentation et distillation de céréales, y compris les produits appelés Yeast Protein Concentrate, dont le profil d'acides aminés ressemble plus à une protéine de céréales qu'à une protéine de levures. Ces produits renferment en effet généralement environ 2 g de lysine pour 100 g de protéine.

La présente invention concerne également une composition riche en protéines de levure comprenant :

- Une teneur en protéines totales comprise entre 25 et 35% ;
- Une teneur en fibres comprise entre 40 et 50% ;
- Une teneur en lipides comprise entre 8 et 12% ;
- Une teneur en sucres réducteurs inférieure à 2% ;
- Une teneur en cendres inférieure à 3%.

La composition riche en protéines de levure de la présente invention présente l'avantage d'être facilement digestible par les animaux, comme démontré dans les exemples ci-après, et notamment par les jeunes animaux d'élevage (porcelets, veaux, jeunes volailles, jeunes crevettes), chiens, chats, poissons de type carnivore (saumon, truite, bar, dorade).

La composition riche en protéines de levure comprend typiquement entre 4 et 8 g de lysine pour 100 g de protéine. Cette teneur est particulièrement avantageuse car la lysine est le premier facteur limitant. Ainsi, elle comprend très peu de protéines végétales, notamment de gluten. De préférence elle est exempte de gluten.

De préférence, la composition riche en protéines de levure présente une digestibilité en lysine, supérieure à 65%, voire supérieure à 70%.

De préférence, la composition riche en protéines de levure présente une digestibilité en méthionine, supérieure à 70%, voire supérieure à 75%.

Les digestibilités des acides aminés peuvent être mesurées selon le protocole décrit dans la publication de Cozannet et al., Journées de la Recherche Porcine, 41, 117-130, 2009, Valeur nutritionnelle des drêches de blé européennes chez le porc en croissance.

De préférence, la composition riche en protéines de levure est susceptible d'être obtenue selon le procédé défini précédemment.

Outre de bonnes propriétés nutritionnelles, cette composition est d'odeur agréable et ne présente pas d'amertume.

Une des raisons expliquant ces propriétés organoleptiques est que la composition riche en protéines de levure comprend généralement, par rapport à la masse sèche totale de cette composition, une quantité d'éthanol inférieure à 0,1%, voire inférieure à 0,05%.

Ainsi la composition peut être utilisée en tant que substitut de la levure de bière. Elle peut notamment être utilisée dans de nombreuses applications de nutrition animale y compris pour les espèces animales ayant une appétence très sélective (notamment chez les chevaux). Plus particulièrement, la composition pourra être incorporée dans les aliments pour animaux, utilisée pour la fabrication de spécialités nutritionnelles pour animaux de rente, en tant que facteurs d'appétence pour les animaux de compagnie ou incorporée à la surface de la ration habituelle (selon la technologie du « top feeding »). Ceci est particulièrement avantageux car les DDGS ne peuvent être utilisés de manière satisfaisante pour les animaux de compagnie ou les jeunes animaux d'élevage du fait de leur faible qualité en protéines (peu d'acides aminés essentiels par rapport à la quantité totale de protéines) et leur faible digestibilité. Au contraire, la composition de l'invention présente l'avantage de pouvoir être utilisée pour l'alimentation des animaux de compagnie, notamment sous la forme de croquettes extrudées, de friandises, voire dans des pâtés. Elle peut également être utilisée dans des aliments pour jeunes animaux d'élevage, par exemple sous la forme d'aliments complets qui peuvent être sous forme de poudres ou de granulés.

L'invention a donc aussi pour objet un aliment pour animaux comprenant la composition riche en protéines de levure objet de la présente invention.

Exemples :

### Exemple 1 : Fabrication de la composition selon l'invention

On prépare un moût fermentescible à base d'amidon de blé comprenant 4% de gluten et 4% de fibres résiduelles.

Le pH du moût fermentescible est fixé à 5,5. Après éclatement de l'amidon par injection de vapeur sous pression, la température maintenue à 90°C pendant un temps de contact de deux heures.

Le moût liquéfié ainsi obtenu est ensuite placé à 60°C et son pH ajusté à 4,5 afin d'être soumis au traitement enzymatique de saccharification.

On ajoute en plus de l'alpha-amylase une glucoamylase et une pullulanase.

L'amidon hydrolysé ainsi obtenu consiste principalement en du glucose.

Avant de réaliser l'étape de fermentation, on effectue un refroidissement à une température de 35°C. On introduit la levure *Saccharomyces cerevisiae* de manière à transformer en milieu anoxique, en éthanol et en dioxyde de carbone.

Un ajout d'air et d'urée est effectué en début de fermentation et le pH est maintenu à une valeur de 4. En fin de fermentation, on maintient le système en anaérobie. La teneur en éthanol en fin de fermentation est de 100 g/L.

On procède ensuite à la distillation du produit fermenté. La distillation permet de séparer d'une part l'éthanol et d'autre part un résidu de distillation présentant une masse sèche de 5%. Le résidu de distillation présente environ 20% de protéines totales sur matière sèche. Cette fraction contient peu de protéines végétales et donc majoritairement des protéines de levures et une quantité en lysine, par rapport à la quantité massique totale de protéines, supérieure à 5% sur sec.

On sépare ensuite à l'aide d'un décanteur horizontal le résidu de distillation pour obtenir :

- Une première fraction (A) riche en fibres et protéines de levures,
- Et une deuxième fraction (B) comprenant des produits solubles du résidu de distillation.

A l'issue de l'étape de séparation, la fraction (A) représente 1/3 en poids sur matière sèche de la quantité de matière sèche totale du résidu de distillation et la fraction (B), les 2/3 restants. La fraction (A) se présente sous forme d'une pâte composée de 30 % de matière sèche, et comprend 45% de fibres résiduelles, 30% de protéines (dont 85% de protéines de levures par rapport au total de protéines), 10% de lipides et 2% de cendres.

On sèche ensuite la fraction (A) en introduisant la pâte obtenue dans un sécheur tourbillonnaire dont l'intérieur de la chambre de chauffage est réglé à 90°C (temps de contact dans la chambre de séchage inférieur à 30 secondes).

On obtient la composition selon l'invention sous la forme d'une composition pulvérulente, présentant un taux d'humidité résiduel de 5%.

Les quantités en acides aminés dans la composition, exprimées en masse sèche par rapport à la masse sèche totale de protéine, après séchage sont reprises dans le Tableau ci-dessous. Egalement sont reprises ces quantités en acide aminés de la fraction (A) lyophilisée.

| ACIDES AMINES | produit lyophilisé | produit séché sur séchoir tourbillonaire |
|---|---|---|
| Acide Aspartique | 7,30 | 7,40 |
| Thréonine | 4,10 | 4,10 |
| Sérine | 5,30 | 5,30 |
| Acide Glutamique | 20,40 | 20,10 |
| Glycine | 4,90 | 4,90 |
| Alanine | 4,90 | 5,00 |
| Valine | 5,40 | 5,50 |
| Isoleucine | 4,20 | 4,30 |
| Leucine | 8,10 | 8,20 |
| Tyrosine | 3,60 | 3,70 |
| Phénylalanine | 4,60 | 4,70 |
| Lysine | 5,40 | 5,40 |
| Histidine | 2,50 | 2,50 |
| Arginine | 6,20 | 6,20 |
| Proline | 7,50 | 7,30 |
| Cystine | 2,20 | 2,30 |
| Méthionine | 1,90 | 1,70 |
| Tryptophane | 1,40 | 1,40 |

La comparaison de la composition lyophilisée avec la composition séchée montre qu'aucune dégradation des protéines n'a lieu lors de l'étape de séchage.

**Exemple 2: Vérification de la consommation spontanée de la composition riche en protéine de levure selon la présente invention:**

**Dispositif expérimental** :

52 chevaux adultes en box individuel (28 hongres, 24 juments) ont été nourris pendant 4 jours consécutifs.

Distribution de la ration habituelle de concentré, la dite ration habituelle étant constituée d'un mélange d'orge, d'avoine, de luzerne déshydratée, et de minéraux) avec en sus 50 g (déposés en surface) de la composition riche en protéine de levure selon la présente invention ou de la levure de bière pure témoin. (Apport en Top-Feeding).

Afin d'éviter les artefacts dus aux caractères des chevaux, chacun des chevaux a été nourri avec la composition riche en protéine de levure et avec de la levure de bière selon le schéma suivant :

- 26 chevaux ont été nourris avec la composition selon la présente invention pendant les deux premiers jours puis avec la levure de bière témoin les deux jours suivants ; et
- 26 chevaux ont été nourris avec levure de bière témoin pendant les deux premiers jours puis avec la composition selon la présente invention les deux jours suivants.

Note de consommation 15 min après la distribution :

Note 1 → Consommation totale.

Note 0 → Reste de la poudre non consommée

**Résultats :**

| Note moyenne sur 10 | Jour 1 | Jour 2 | Jour 3 | Jour 4 |
|---|---|---|---|---|
| Levure de bière témoin | 2,3 | 4,6 | 5,7 | 6,9 |
| Composition selon la présente invention | 6,1 | 8,8 | 7,3 | 8,5 |

La consommation spontanée lors du premier jour est nettement meilleure pour la composition selon la présente invention comparativement à la levure de bière témoin. Lors des jours suivants, l'acceptation s'améliore pour les 2 produits mais reste supérieure pour la composition de la présente invention comparativement à la levure témoin.

La consommation spontanée de la composition objet de la présente invention est meilleure que la levure de bière.

**Exemple 3: Digestibilité des protéines de la composition riche en protéine de levure selon la présente invention**

Un échantillon représentatif de la composition a été utilisé pour réaliser une mesure de digestibilité des acides aminés "In Vivo", sur des porcs en croissance.

Le protocole utilisé et la station de recherche sont identiques à ce qui est décrit dans la publication de 2009, Journées de la Recherche Porcine, 41, 117-130, valeur nutritionnelle des drêches de blé européennes chez le porc en croissance (Station de Recherche Arvalis - France)

Les résultats de composition en acides aminés, et leurs coefficients de digestibilité iléale standardisée, sont présentés dans le tableau ci-dessous, en comparaison avec la moyenne des dix drêches de blé européennes collectées durant l'été 2007, et des valeurs de la Table INRA/AFZ 2002, levure de brasserie déshydratée.

| | Moyenne de 10 drêches de blé européennes J.R.P. 2009 | Composition de la présente invention Etude ARVALIS 2015 | Levure de brasserie déshydratée INRA/AFZ 2002 |
|---|---|---|---|
| **Composition sur produit tel quel** | | | |
| Matière sèche % | 92,6 | 93,9 | 93,3 |
| Protéines % (matières azotées totales N. 6,25) | 33,7 | 27,6 | 46,5 |
| Matières minérales % | 4,9 | 1,4 | 7,1 |
| Matières grasses % | 4,3 | 8,4 | 3,9 |
| **Acides aminés** g/100g de protéine | | | |
| Lysine | 1,91 | 5,37 | 6,1 |
| Méthionine | 1,43 | 1,77 | 1,5 |
| Cystine | 1,76 | 1,84 | 0,6 |
| Thréonine | 2,95 | 3,98 | 4,3 |
| Tryptophane | 1,05 | 1,26 | 1,0 |
| Arginine | 3,76 | 5,85 | 4,4 |
| Valine | 4,22 | 5,27 | 4,7 |
| **Coefficient de digestibilité iléale standardisée porcs** % | | | |
| Lysine | 55,7 | 72,6 | 74 |
| Méthionine | 72,0 | 80,4 | 69 |
| Cystine | 77,2 | 75,3 | 49 |
| Thréonine | 74,9 | 70,6 | 66 |
| Tryptophane | 77,3 | 69,4 | 55 |
| Arginine | 83,0 | 81,0 | 78 |
| Valine | 74,3 | 75,1 | 66 |

Le tableau ci-dessus démontre que la composition de la présente invention est nettement plus riche en lysine totale que le coproduit habituel d'éthanol drêche de blé (5,37 versus 1,91 g/100 g de protéine) et que cette lysine est plus digestible (72,6 % versus 55,7 %).

La teneur en lysine sur protéine brute de la présente invention se rapproche de celle de la levure de bière (5,37 versus 6,1 g/100 g), avec une digestibilité équivalente (72,6 versus 74 %).

## Revendications

1. Procédé de récupération d'une composition riche en protéines de levure d'un résidu de distillation issu de la production d'éthanol comprenant :

   a) la préparation d'un moût fermentescible comprenant au moins 40% en poids d'amidon de blé ;
   b) l'hydrolyse enzymatique du moût fermentescible;
   c) la fermentation de l'hydrolysat ainsi obtenu ;
   d) la distillation du produit fermenté;
   e) la séparation du résidu de distillation pour obtenir :

   • une première fraction (A) riche en protéines de levure et contenant des fibres résiduelles ;
   • une deuxième fraction (B) comprenant des produits solubles du résidu de distillation ;

   f) le séchage de la fraction (A) pour obtenir une composition riche en protéines de levure ; **caractérisé en ce que** le moût fermentescible comprend moins de 10% de protéines végétales et entre 3 et 6 % de fibres résiduelles.

2. Procédé de récupération d'une composition riche en protéines de levure selon la revendication 1, **caractérisé en ce que** l'étape a) comprend la préparation d'un lait d'amidon de blé comprenant:

   - L'élimination des fibres de céréales du blé par broyage et tamisage ; et
   - L'élimination du gluten par lixiviation.

3. Procédé de récupération d'une composition riche en protéines de levure selon l'une des revendications 1 à 2, **caractérisé en ce que** le moût fermentescible comprend de l'amidon provenant d'autres sources que le blé choisi parmi l'amidon de maïs, de seigle, d'orge, d'avoine, de triticale, d'épeautre, de millet, de sorgho, de fèverole, de pomme de terre, de patate douce, de riz, de quinoa, de châtaigne, de lentille, de pois chiche, d'haricot, de fève, de manioc ou de sarrasin ou leurs mélanges.

4. Procédé de récupération d'une composition riche en protéines de levure selon l'une des revendications 1 à 3, caractérisé en que le moût fermentescible comprend en outre un complément de matières fermentescibles, de préférence choisi parmi les sucres ou les sirops de glucose issus de l'hydrolyse de l'amidon.

5. Procédé de récupération d'une composition riche en protéines de levure selon la revendication 1 à 4, **caractérisé en ce que** le moût fermentescible comprend exclusivement du lait d'amidon de blé.

6. Procédé de récupération d'une composition pulvérulente riche en protéines de levure selon l'une quelconque des revendications 1 à 5, **caractérisé en ce que** l'étape de séparation e) du résidu de distillation est réalisée à l'aide d'un appareil de décantation, de préférence un décanteur horizontal.

7. Procédé de récupération d'une composition pulvérulente riche en protéines de levure selon l'une quelconque des revendications 1 à 6, **caractérisé en ce que** l'étape de séchage est réalisée à l'aide d'un sécheur tourbillonnaire.

8. Composition riche en protéines de levure, **caractérisée en ce qu'**elle comprend :

   - Une teneur en protéines totales comprise entre 25 et 35% ;
   - Une teneur en fibres comprise entre 40 et 50% ;
   - Une teneur en lipides comprise entre 8 et 12% ;
   - Une teneur en sucres réducteurs inférieure à 2% ;
   - Une teneur en cendres inférieure à 3%.

9. Composition riche en protéines de levure selon la revendication 8, **caractérisée en ce qu'**elle comprend entre 4 et 8 g de lysine pour 100 g de protéine.

10. Composition riche en protéines de levure selon l'une des revendications 8 ou 9, **caractérisée en ce qu'**elle est susceptible d'être obtenue selon le procédé défini dans l'une quelconque des revendications 1 à 7.

11. Aliment pour animaux comprenant la composition riche en protéines de levure telle que définie dans l'une quelconque des revendications 8 à 10.

**Patentansprüche**

1. Verfahren zur Gewinnung einer Zusammensetzung, die reich an Hefeproteinen ist, aus einem Destillationsrückstand der aus der Ethanolherstellung stammt, umfassend:

a) die Herstellung einer fermentierbaren Maische, umfassend mindestens 40 Gew.-% Weizenstärke;
b) die enzymatische Hydrolyse der fermentierbaren Maische;
c) die Fermentation des so erhaltenen Hydrolysats;
d) die Destillation des fermentierten Produkts;
e) die Trennung des Destillationsrückstands, um zu erhalten:

• eine erste Fraktion (A), die reich an Hefeproteinen ist und Restfasern enthält;
• eine zweite Fraktion (B), umfassend lösliche Produkte des Destillationsrückstands;

f) die Trocknung der Fraktion (A), um eine Zusammensetzung zu erhalten, die reich an Hefeproteinen ist;

**dadurch gekennzeichnet, dass** die fermentierbare Maische weniger als 10% pflanzliche Proteine und zwischen 3 und 6% Restfasern umfasst.

2. Verfahren zur Gewinnung einer Zusammensetzung, die reich an Hefeproteinen ist, nach Anspruch 1, **dadurch gekennzeichnet, dass** der Schritt a) die Herstellung einer Weizenstärkemilch umfasst, umfassend:

- die Entfernung der Weizengetreidefaser durch Mahlen und Sieben; und
- die Entfernung von Gluten durch Auslaugung.

3. Verfahren zur Gewinnung einer Zusammensetzung, die reich an Hefeproteinen ist, nach einem der Ansprüche 1 bis 2, **dadurch gekennzeichnet, dass** die fermentierbare Maische Stärke umfasst, die aus anderen Quellen als dem Weizen stammt, ausgewählt aus Maisstärke, Roggenstärke, Gerstenstärke, Haferstärke, Triticalestärke, Dinkelstärke, Hirsestärke, Sorghumstärke, Ackerbohnenstärke, Kartoffelstärke, Süßkartoffelstärke, Reisstärke, Quinoastärke, Kastanienstärke, Linsenstärke, Kichererbsenstärke, Bohnenstärke, Saubohnenstärke, Maniokstärke oder Buchweizenstärke oder Mischungen davon.

4. Verfahren zur Gewinnung einer Zusammensetzung, die reich an Hefeproteinen ist, nach einem der Ansprüche 1 bis 3, **dadurch gekennzeichnet, dass** die fermentierbare Maische ferner einen Zusatz zu den fermentierbaren Materialien umfasst, vorzugsweise ausgewählt aus den Zuckern oder den Glucosesirupen, die aus der Hydrolyse der Stärke stammen.

5. Verfahren zur Gewinnung einer Zusammensetzung, die reich an Hefeproteinen ist, nach dem Anspruch 1 bis 4, **dadurch gekennzeichnet, dass** die fermentierbare Maische ausschließlich Weizenstärkemilch umfasst.

6. Verfahren zur Gewinnung einer pulverförmigen Zusammensetzung, die reich an Hefeproteinen ist, nach einem der Ansprüche 1 bis 5, **dadurch gekennzeichnet, dass** der Trennungsschritt e) des Destillationsrückstands unter Verwendung einer Dekantiervorrichtung, vorzugsweise eines horizontalen Dekanters, durchgeführt wird

7. Verfahren zur Gewinnung einer pulverförmigen Zusammensetzung, die reich an Hefeproteinen ist, nach einem der Ansprüche 1 bis 6, **dadurch gekennzeichnet, dass** der Trocknungsschritt unter Verwendung eines Wirbeltrockners durchgeführt wird.

8. Zusammensetzung, die reich an Hefeproteinen ist, **dadurch gekennzeichnet, dass** sie umfasst:

- einen Gesamtproteingehalt zwischen 25 und 35 %;
- einen Fasergehalt zwischen 40 und 50 %;
- einen Lipidgehalt zwischen 8 und 12 %;
- ein Gehalt an reduzierenden Zuckern von weniger als 2%;
- ein Aschegehalt von weniger als 3%.

9. Zusammensetzung, die reich an Hefeproteinen ist, nach Anspruch 8, **dadurch gekennzeichnet, dass** sie zwischen 4 und 8 g Lysin pro 100 g Protein enthält.

10. Zusammensetzung, die reich an Hefeproteinen ist, nach einem der Ansprüche 8 oder 9, **dadurch gekennzeichnet, dass** sie nach dem in einem der Ansprüche 1 bis 7 definierten Verfahren erhältlich ist.

11. Tierfutter, umfassend die Zusammensetzung, die reich an Hefeproteinen ist, die in einem der Ansprüche 8 bis 10 definiert ist.

**Claims**

1. A process for recovering a composition rich in yeast proteins from a distillation residue resulting from ethanol production, comprising:

   a) preparation of a fermentable must comprising at least 40% by weight of wheat starch;
   b) enzymatic hydrolysis of the fermentable must;
   c) fermentation of the hydrolyzate thus obtained;
   d) distillation of the fermented product;
   e) separation of the distillation residue so as to obtain:

      • a first fraction (A) rich in yeast proteins and containing residual fibers;
      • a second fraction (B) comprising soluble products of the distillation residue;

   f) drying of the fraction (A) so as to obtain a composition rich in yeast proteins;

   **characterized in that** the fermentable must comprises less than 10% of vegetable proteins and between 3% and 6% of residual fibers.

2. The process for recovering a composition rich in yeast proteins as claimed in claim 1, **characterized in that** step a) comprises the preparation of a wheat starch milk comprising:

   - removal of the wheat cereal fibers by milling and sieving; and
   - removal of the gluten by leaching.

3. The process for recovering a composition rich in yeast proteins as claimed in either of claims 1 and 2, **characterized in that** the fermentable must comprises starch originating from sources other than wheat, chosen from corn, rye, barley, oat, triticale, spelt, millet, sorghum, horse bean, potato, sweet potato, rice, quinoa, chestnut, lentil, chickpea, bean, broad bean, cassava or buckwheat starch, or mixtures thereof.

4. The process for recovering a composition rich in yeast proteins as claimed in one of claims 1 to 3, **characterized in that** the fermentable must also comprises a supplement of fermentable materials, preferably chosen from sugars or glucose syrups resulting from starch hydrolysis.

5. The process for recovering a composition rich in yeast proteins as claimed in claims 1 to 4, **characterized in that** the fermentable must comprises exclusively wheat starch milk.

6. The process for recovering a pulverulent composition rich in yeast proteins as claimed in any one of claims 1 to 5, **characterized in that** the step of separation e) of the distillation residue is carried out using a decanting device, preferably a horizontal decanter.

7. The process for recovering a pulverulent composition rich in yeast proteins as claimed in any one of claims 1 to 6, **characterized in that** the drying step is carried out using a dispersion dryer.

8. A composition rich in yeast proteins, **characterized in that** it comprises:

    - a total protein content of between 25% and 35%;
    - a fiber content of between 40% and 50%;
    - a lipid content of between 8% and 12%;
    - a reducing sugar content of less than 2%;
    - an ash content of less than 3%.

9. The composition rich in yeast proteins as claimed in claim 8, **characterized in that** it comprises between 4 and 8 g of lysine per 100 g of protein.

10. The composition rich in yeast proteins as claimed in either of claims 8 and 9, **characterized in that** it can be obtained according to the process defined in any one of claims 1 to 7.

11. An animal feed comprising the composition rich in yeast proteins as defined in any one of claims 8 to 10.

**RÉFÉRENCES CITÉES DANS LA DESCRIPTION**

**Documents brevets cités dans la description**

- FR 2949645
- WO 2010109203 A
- US 2698826 A
- US 4361651 A
- WO 03063609 A
- DE 102007040068
- EP 213023 A
- WO 20080099733 A

**Littérature non-brevet citée dans la description**

- *Food and Energy Security,* 2013, vol. 2 (3), 197-206
- **COZANNET et al.** *Journées de la Recherche Porcine,* 2009, vol. 41, 117-130
- *Journées de la Recherche Porcine,* 2009, vol. 41, 117-130